# EUROPEAN PATENT APPLICATION

(11) **EP 3 337 178 A1**
(43) Date of publication of application: **20.06.2018**
(21) Application number: 16306709.3
(22) Date of filing: 16.12.2016
(51) Int. Cl.: H04N 21/81, H04N 21/63, H04N 21/654, H04N 21/462, H04N 21/262, H04N 21/231, H04L 29/08

(54) **METHOD FOR DISTRIBUTING METADATA TO DEVICES IN A NETWORK AND CORRESPONDING METADATA DISTRIBUTION DEVICE, CORRESPONDING METHOD FOR RECEIVING METADATA FROM DEVICES IN A NETWORK AND CORRESPONDING DEVICE**

(71) Applicant: Thomson Licensing, 92130 Issy-les-Moulineaux (FR)
(72) Inventor: MORIN, THOMAS, 35576 CESSON SEVIGNE CEDEX (FR); DRUGEON-HAMON, DAVID, 35576 CESSON SEVIGNE CEDEX (FR); JEGOU, KARINE, 35576 CESSON SEVIGNE CEDEX (FR)
(74) Representative: Huchet, Anne

(57) **Abstract**

Metadata is distributed to devices in a network. Updates to metadata are transmitted to devices in the network via update notification messages and requests for transmission of updates. The metadata updates are transmitted and installed by devices in the network. Information comprising a selection of devices in the network that have installed the metadata update is transmitted to devices in the network so that the devices in the network can retrieve updated metadata from the (other) devices in the network.

## Description

### FIELD

The present disclosure generally relates to the field of distribution of metadata to a plurality of receiver devices, and in particular to improvement of the same.

### BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Receiver devices (multimedia renderers) such as Set Top Boxes (STBs), smart TVs, smartphones and tablets use the services of a content provider for retrieving metadata information such as Electronic Program Guides (EPG), Video on Demand (VoD) catalogs, and Replay TV catalogs, personalized content recommendation and individual content searches. This calls for important resources on the content provider side and requires significant processing power, bandwidth and storage. In addition, the content provider's backend resources are to be dimensioned such that a sufficient amount of these resources are available to prevent connection problems and lagging during periods of peak demand. The content provider's backend needs multiple server instances to ensure a good quality of service during peak demands. This over dimensioning requirement results in a non-optimal use of the content provider's resources during periods of low demand.

There is thus a need for optimization of resources required for distribution of metadata to receiver devices.

### SUMMARY

According to one aspect of the present disclosure, a method for distributing metadata to devices in a network is provided that comprises transmitting a metadata update notification to devices in the network. The method further comprises receiving a request for transmission of a metadata update from at least one of the devices in the network to which the metadata update notification is transmitted; transmitting the metadata update to the at least one of the devices in the network from which a request for transmission of a metadata update is received; receiving an update installed notification from at least one of the devices in the network to which the metadata update is transmitted; receiving, from at least one device in the network, a request for transmission of information comprising a selection of devices in the network that have installed the metadata update; and transmitting, to the at least one device in the network from which the request for transmission of information is received, the information enabling the at least one device in the network from which the request for transmission of information is received to retrieve updated metadata from the selection of devices in the network.

According to an embodiment of the method for distributing metadata to devices in a network, the metadata update notification is selectively addressed to devices in the network that store metadata that is subject to the metadata update.

According to an embodiment of the method for distributing metadata to devices in a network, the information comprises at least one device identifier enabling a device in the network to address a request for metadata to the at least one device identified by the device identifier.

According to an embodiment of the method for distributing metadata to devices in a network, the information further comprises a list of metadata per the at least one device identified by the device identifier and stored by the at least one device identified by the device identifier.

According to an embodiment of the method for distributing metadata to devices in a network, the method further comprises marking as updated in a local list of devices in the network from which the update installed notification is received; and using the local list for the selection of devices in the network that have installed the metadata update by selecting at least one device from the local list that is marked in the local list as having installed the metadata update.

According to an embodiment of the method for distributing metadata to devices in a network, the method further comprises marking as dormant in the local list devices in the network that are unavailable; and excluding devices in the network that are marked in the local list as unavailable from the selection of devices in the network that have installed the metadata update for the transmitting of information comprising a selection of devices in the network.

The present principles also relate to a metadata distribution device for distributing metadata to devices in a network. The metadata distribution device comprises a processor, a memory and a network interface configured to: transmit a metadata update notification to devices in the network; receive a request for transmission of a metadata update from at least one of the devices in the network to which the metadata update notification is transmitted; transmit the metadata update to the at least one of the devices in the network from which a request for transmission of a metadata update is received; receive an update installed notification from at least one of the devices in the network to which the metadata update is transmitted; receive, from at least one device in the network, a request for transmission of information comprising a selection of devices in the network that have installed the metadata update; and transmit, to the at least one device in the network from which the request for transmission of information is received, the information enabling the at least one device in the network from which the request for transmission of information is received to retrieve updated metadata from the selection of devices in the network.

According to an embodiment of the metadata distribution device, the processor, the memory and the network interface are further configured to selectively address the metadata update notification to devices in the network that store metadata that is subject to the metadata update.

According to an embodiment of the metadata distribution device, the processor, the memory and the network interface are further configured to mark as updated in a local list of devices in the network from which the update installed notification is received; and to use the local list for the selection of devices in the network that have installed the metadata update by selecting at least one device from the local list that is marked in the local list as having installed the metadata update.

According to an embodiment of the metadata distribution device, the processor, the memory and the network interface are further configured to mark as dormant in the local list devices in the network that are unavailable; and to exclude devices in the network that are marked in the local list as unavailable from the selection of devices in the network that have installed updated metadata for the selection of devices in the network.

According to an embodiment of the metadata distribution device, the processor, the memory and the network interface are further configured to receive unavailability notifications respectively availability notifications from devices in the network that enter, respectively exit, a period of unavailability.

According to one aspect of the present disclosure, a method for receiving metadata from devices in a network is provided that comprises: receiving, from a metadata distribution device, a metadata update notification; transmitting, to the metadata distribution device, a request for transmission of a metadata update; receiving, from the metadata distribution device, the metadata update in response to the request; storing the metadata update received from the metadata distribution device; transmitting, to the metadata distribution device, an update installed notification; receiving, from at least one of the devices in the network, a request for transmission of metadata; and transmitting, to the at least one of the devices in the network from which the request for transmission of metadata is received, the stored metadata update.

According to an embodiment of the method for receiving metadata, the method comprises transmitting, to the metadata distribution device, an unavailability notification when entering a period of unavailability, and transmitting, to the metadata distribution device, an availability notification when exiting the period of unavailability.

The present principles also relate to a device in a network. The device comprises a processor, a memory and a network interface configured to: receive, from a metadata distribution device, a metadata update notification; transmit, to the metadata distribution device, a request for transmission of a metadata update; receive, from the metadata distribution device, the metadata update in response to the request; store the metadata update received from the metadata distribution device in the memory; transmit, to the metadata distribution device, an update installed notification; receive, from at least one of the devices in the network, a request for transmission of metadata; and transmit, to the at least one of the devices in the network from which the request for transmission of metadata is received, the metadata update stored in the memory.

According to an embodiment of the device in a network, the processor, the memory and the network interface are further configured to transmit, to the metadata distribution device, an unavailability notification when entering a period of unavailability; and to transmit, to the metadata distribution device, an availability notification when exiting the period of unavailability.

### BRIEF DESCRIPTION OF THE DRAWINGS

More advantages of the present disclosure will appear through the description of particular, non-restricting embodiments. In order to describe the manner in which the advantages of the present disclosure can be obtained, particular descriptions of the present principles are rendered by reference to specific embodiments thereof which are illustrated in the appended drawings. The drawings depict exemplary embodiments of the disclosure and are therefore not to be considered as limiting its scope. The embodiments described can be combined to form particular advantageous embodiments. In the following figures, items with same reference numbers as items already described in a previous figure will not be described again to avoid unnecessary obscuring the disclosure.

Embodiments will be described with reference to the following drawings in which:
**Figure 1** is an exemplary prior art network topology for distribution of metadata to a plurality of receivers.
**Figure 2** is an embodiment of a metadata distribution network topology according to the present principles.
**Figure 3** is a sequence chart illustrating an embodiment of a method according to the present principles.
**Figure 4** is a flow chart of an embodiment of the method for distributing metadata to devices in a network according to the present principles.
**Figure 5** is a flow chart of an embodiment of the method for receiving metadata from devices in a network according to the present principles.
**Figure 6** is an embodiment of a metadata distribution device capable of implementing embodiments of the method for metadata distribution according to the present principles.
**Figure 7** is an embodiment of a network device capable of implementing embodiments of the method for receiving metadata from devices in a network according to the present principles.

It should be understood that the drawings are for purposes of illustrating the concepts of the disclosure and are not necessarily the only possible configuration for illustrating the disclosure.

### DETAILED DESCRIPTION

The present description illustrates embodiments of the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

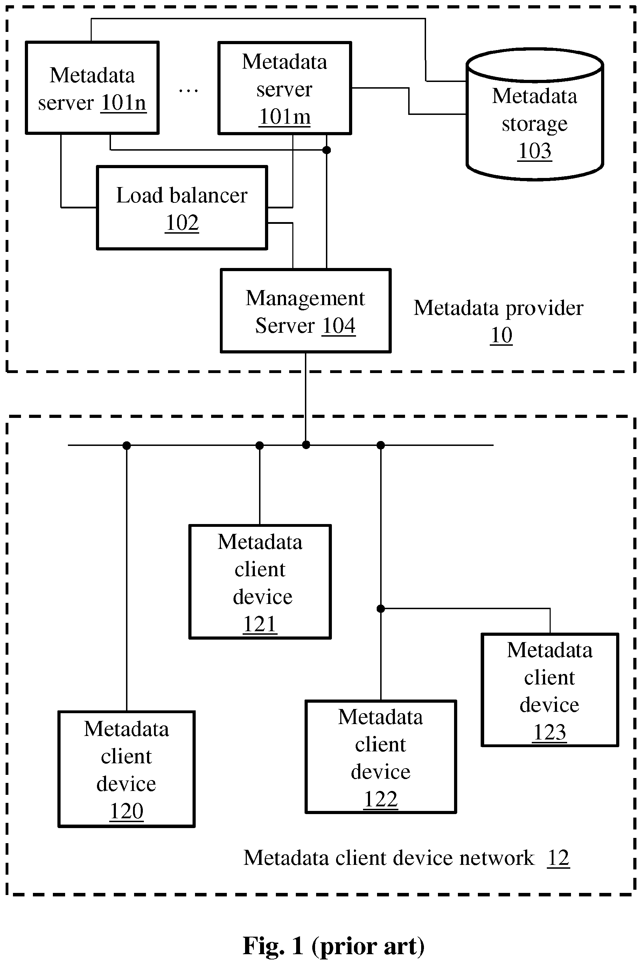

**Figure 1** is an exemplary prior art network topology for distribution of metadata such as EPG information, VoD- and replay catalogs to a plurality of metadata client devices ((metadata-) receiver devices or (metadata-) receivers). The prior art metadata distribution network topology includes a metadata provider **10** and a metadata client device network **12.** Metadata provider **10** includes a plurality of metadata servers **101** n..m for serving metadata to metadata client devices **120-123** in metadata client device network **12;** a load balancer **102** for distribution, among the metadata servers **101** n..m, of requests for metadata originating from metadata client device network **12;** a management server **104** for internal management of the devices of metadata provider **10** and for subscriber authentication; and a metadata storage **103** for local metadata storage. Alternatively, the source (origin) of the metadata is external or the metadata provider **10** uses a mix of internal and external sources.

When metadata provider **10** receives metadata requests from metadata client devices **12,** the management server **104** authenticates the metadata requests and transmits authenticated requests to load balancer **102.** Load balancer **102** addresses the authenticated metadata requests to the metadata servers **101** n..m, whereby load balancer **102** selects servers **101** n..m according to a load balancing strategy. Each individual authenticated metadata request is executed by one of metadata servers **101** n..m as selected by the load balancer **102.** A selected metadata server **101** n..m retrieves the requested metadata from metadata storage **103** and transmits the retrieved metadata to the requesting metadata client device in metadata client device network **12.** Metadata provider **10** is configured such that the resources in terms of metadata servers are sufficient to avoid serious slow-downs due to connection- and request overload occurring during periods of peak demand. The exemplary metadata distribution system requires a load balancing system and several front-end servers in order to guarantee a constant Quality of Service including during periods of peak demand. Moreover, if the load-balancing system is not adaptive (for example, not using cloud resources), some of the front-end servers may remain inactive during periods of lower than peak demand, resulting in a waste of computing resources and energy. Scalability of this prior-art solution is difficult.

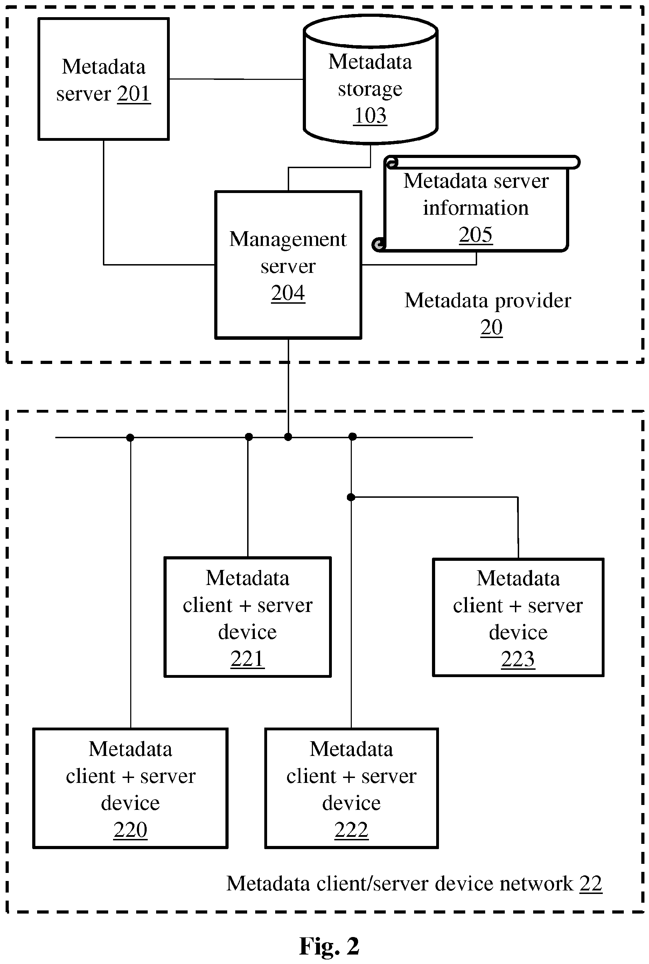

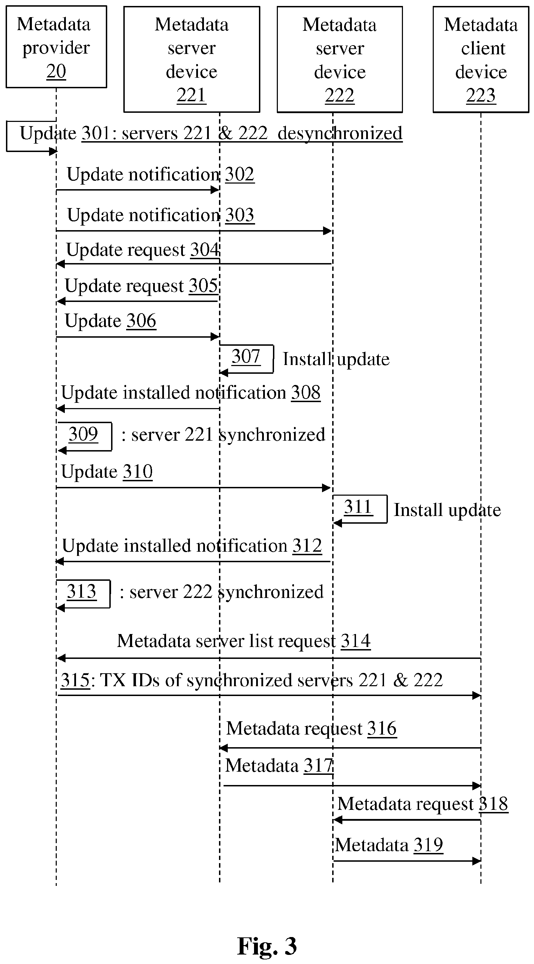

**Figure 2** is an embodiment of a metadata distribution network topology according to the present principles. A metadata provider **20** includes a single metadata server **201** and a management server **204** that has access to information **205** related to metadata server devices (and related to the metadata (e.g. files) that they store) in metadata client/server network **22.** Metadata server information **205** is for example stored in one or more files on a disc, one or more tables in a memory, or in records in a database. Metadata provider **20** is connected to a plurality of metadata client/server devices **22** including devices **220** to **223** (e.g., set-top boxes, (home-, Internet access-) gateways, mobile devices such as tablets and smartphones). The distribution of metadata in the exemplary metadata distribution network topology of figure **2** is further explained through the exemplary sequence chart of figure **3****.** According to a different embodiment, the metadata provider may comprise more or less devices than depicted in figure **2****,** and some or all of the depicted devices may be included (grouped) in a single device. From the following it will become clear that resource/energy management and scalability are inherent features of embodiments of the present principles.

**Figure 3** is a sequence chart illustrating an embodiment of a method according to the present principles with the aid of a non-restricting use case. The devices in metadata client/server device network **22** are hereinafter referred to as 'metadata client device' or 'metadata server device' (respectively 'metadata client' and 'metadata server' or 'client' and 'server') or indifferently as 'device') according to the role (metadata client, metadata server, or both) that is emphasized. In principle, all devices in the metadata client/server device network **22** are capable (have sufficient resources) to operate as both a metadata client and as a metadata server. In practice, some devices in network **22** may however not include a metadata server functionality (may not be used as a metadata server), e.g., for reasons of (temporary) insufficient performance. Those devices may be (temporarily) excluded from being comprised in metadata server information **205,** or may be (temporarily) marked in metadata server information **205** as being (temporarily) unavailable and thereby be excluded from being included in the information comprising a selection of devices in the network **22** when transmitting information comprising a selection of devices in network **22** that have installed a metadata update. Reasons of (temporary) unavailability are, for example: intensive resource use for high priority use of the device for streaming, recording, or gaming activity, power failure, shut down or standby state of the device, bandwidth overload and network failure. According to a particular embodiment, devices in network **22** transmit unavailability notifications and availability notifications to the metadata management server **204,** so that the latter can (temporarily) exclude, respectively reintegrate, the device having transmitted the notification in the information **205** or (temporarily) mark the device having transmitted the notification in metadata server information **205** as being (temporarily) unavailable, respectively remove the discussed marking. For example, a device in network **22** transmits an unavailability notification to metadata management server **204** when entering a standby mode or when entering an intensive resource (CPU, network...) use mode (gaming, streaming, high-speed file download...), and transmits an availability notification to the metadata management server **204** when exiting from the standby mode or the intensive resource use mode.

When an update **301** is made to original metadata (e.g., to the metadata stored in metadata storage **103**), metadata server devices (e.g., **221** and **222** according to the present non-restrictive use case) that are marked in metadata server information **205** as storing the metadata (or part of the metadata that is subject to the update) that needs to be updated are marked by the management server **204** as being desynchronized (stale, not updated, outdated) with regard to the update as they have an 'old' (stale, outdated, previous) version of the metadata (or an 'old' part of the metadata). Metadata management server **204** then sends an update notification message **302, 303** to desynchronized metadata server devices **221** and **222** located in network **22.** Metadata management server **204** finds the identifier (address, device identifier) of each metadata server located in network **22** as stored in metadata server information **205.** This identifier (address, device identifier) enables the devices in the network **22** to address a request for metadata to the device in the network **22** identified by the identifier. Following the receipt **302, 303** of the update notification message, the metadata server devices **221, 222** each transmit **304, 305** an update request message to the metadata provider **20.** Following the receipt of these update request messages **304, 305** from the metadata server devices **221, 222,** the metadata provider **20** transmits **306, 310** the metadata update to the metadata servers **221, 222.** Upon receipt of the metadata update, the metadata servers **221, 222** install (store) **307, 311** the metadata update, and metadata servers **221, 222** send **308, 312** an update installed (stored) notification message to metadata provider **20.** Upon receipt of the update installed notifications **308, 312** metadata provider **20** marks **309, 313** metadata servers **221, 222** in the metadata server information **205** as being synchronized (no longer stale, no longer outdated, updated, up-to-date, new) with reference to the updated original metadata (e.g., as stored in metadata storage **103**).

When metadata provider **20** receives a metadata request **314** from a metadata client device **223,** management server **204** searches the metadata server information **205** for synchronized metadata servers having (part of) the requested metadata, and transmits **315** the identifiers (addresses, device identifiers, information comprising a selection of devices in network **22** that have installed said metadata update) of a selection of synchronized metadata server devices (here, **221, 222** according to the present non-restrictive use case) to metadata client device **223.** Alternatively, request **314** is a particular request for retrieval of identifiers (addresses, information comprising a selection of devices in network **22** that have installed a metadata update) of metadata servers having (part of) the requested metadata. Having received the identifiers (addresses, information comprising a selection of devices in network **22** that have installed a metadata update) of the synchronized metadata server devices, metadata client device **223** requests **316** and **318** metadata parts from the metadata server devices **221** and **222** (e.g., a first half (part) of a file or EPG or VoD catalog from metadata server **221** and a second half (part) of the same file or EPG or VoD catalog from metadata server **222**). Alternatively, the information provided by metadata provider **20** includes per metadata server device included in the mentioned information, per metadata server a list of parts of the requested metadata (e.g., a list of file chunks) stored by the metadata server device in network **22.**

The metadata server devices **221** and **222,** upon receiving the request **316, 318** for metadata from metadata client device **223,** transmit **317, 319** the requested metadata to metadata client device **223.** Metadata client device **223** can now use the received metadata, e.g., for display to a user of device **223,** e.g. on a display connected to an audio/video interface of the device **223.** According to a particular embodiment, metadata client device **223** informs metadata provider **20** that it has stored the metadata. This enables the management server **204** to add device **223** to the metadata server information **205** as having the metadata (e.g. EPG or VoD catalog, a part of full EPG or VoD catalog, a file or a particular part (chunk) of a file). The management server **204** can now include device **223** in a transmission of identifiers of synchronized metadata servers (information comprising a selection of devices in network **22** that have installed a metadata update) when a device in network **22** requests the metadata.

Preferably, a device in network **22** that receives a list of identifiers (addresses, information comprising a selection of devices in the network that have installed a metadata update) of metadata server devices from management server **204** that have (detain, store) the requested metadata, addresses a subsequent request for metadata to more than one metadata server device in the list (included in the information comprising a selection of devices in network **22** that have installed (an updated version of) the requested metadata). Complete metadata is then constructed by the metadata requesting device from metadata (metadata chunks) delivered from different metadata server devices in network **22,** and the metadata may be used by the requesting device once the requested metadata is completed, i.e., when all chunks of the metadata have been received from the different devices in network **22.** Alternatively, the requesting device can use the received metadata (e.g., for display of an HTML page) based on chunks already received when all chunks have not yet been received, e.g., in an embodiment where the metadata client device shows an image on a HTML page that is completed while displaying, with the missing chunks completing the displayed information as they are received.

According to a particular embodiment, when an update to metadata is to be installed in the network **22,** the metadata management server **204** marks in the metadata server information **205** all metadata server devices that have an 'old' version of metadata (e.g., a file, or part of a file) as desynchronized and sends them update notifications. This is an example of selective addressing of a metadata update notification to devices in network **22** that store metadata that is subject to the metadata update. During the installing of updates in the devices of the network **22,** there are initially not enough metadata servers for providing the updated metadata to an important number of metadata clients should an important number of metadata clients request the metadata that is being updated. Therefore, while metadata updates are installed in the network **22,** metadata requests concerning the metadata of which an update is deployed in the network **22** continue to be serviced by metadata server devices that still have the old version, so that the metadata client devices can be provided with the requested metadata. To do so, the metadata management server **204** transmits to a metadata client device that requests metadata that is being updated a list of desynchronized metadata server devices until there are enough metadata server devices that are synchronized, i.e. that have installed the updated metadata. According to a particular embodiment, the metadata management server defines a threshold of a number of metadata server devices that have installed the update. While the number of metadata server devices having installed a metadata update is inferior to the threshold, the metadata management server **204** will transmit, to metadata client devices requesting the metadata being updated, a list of unsynchronized (stale) metadata server devices, and only if the number is superior to the threshold, it will transmit a list of synchronized metadata servers having the updated version of the requested metadata. According to a particular embodiment, the threshold is defined as a function of a number of metadata requests per unit of time. For example, the threshold is set to increase/decrease as a function of an increase/decrease of the number of requests for the metadata per time unit (e.g., expressed as a total number of requests per second or per minute). Of course, a same metadata server device can be synchronized for metadata A while being desynchronized for metadata B.

According to a particular embodiment, the metadata management server **204** implements a servicing policy for selection of metadata server devices that it transmits to metadata client devices when metadata is requested. For example, the servicing policy includes a random selection of a number of metadata server devices having (at least part of) the requesting metadata. For example, the servicing policy includes a selection of a number of metadata server devices having a known high throughput (bandwidth). For example, the servicing policy includes selecting preferably a number of metadata server devices that are 'close' to the requesting metadata client device, wherein 'close' is defined as having a near or same IP address or based on a network topology constructed in the metadata management server 204 wherein the term 'close' is defined as being within proximity of the requesting metadata client in terms of a number of network hops required for a metadata server device to reach the requesting metadata client device. Of course, any of the above example servicing policies may be combined to form a particular efficient servicing policy.

A metadata server device can replace or remove metadata, for example, because of limited storage resources. According to a particular embodiment, a metadata server device indicates, by means of a message to the management server **204,** the list of files (and possibly their version) that it stores and which it proposes for delivery to metadata client devices. The management server updates the metadata server information **205** accordingly.

According to a further improvement, the number of metadata server devices is highly flexible and is easily scaled to the frequency of metadata requests received and is monitored by metadata management server **204.** The above discussed metadata servicing policy then may include, during periods of high metadata request rates, i.e. during a period of peak demand, mobilization of metadata server devices that are known to have a lower throughput than the previously discussed high throughput and/or that are not in proximity of the requesting device. Metadata server devices in the metadata server information **205** can be marked in the metadata server information **205** as being dormant, i.e. they are listed in the metadata servers information **205** but their address will not be provided to a metadata requesting device unless particular conditions apply; these particular conditions include for example the metadata request rate exceeding a threshold.

According to a particular embodiment, a metadata server device is set to be dormant based on measurement of the metadata server device's throughput. If the metadata server device's throughput (network bandwidth, metadata request handling delay/duration) drops below a specific value (threshold, limit) during a given time duration (time lap), the metadata server device is marked as being dormant in the metadata server device information **205.** When a dormant metadata server device throughput rises above a specific value during a given time duration (time lap), the metadata server device's dormant marking is removed. The metadata server device's throughput can be obtained periodically by the metadata management server **204,** based on measurements done by the metadata management server **204** itself, or be provided to the metadata management server **204** when the metadata server device communicates with the metadata management server **204 ,** e.g., when transmitting an update request **304, 305** or when replying to an update notification message **302, 303.** The throughput of a metadata server device may vary due to many different reasons including user-operated powering down and resource unavailability due to resource intensive use (e.g., streaming, recording, or gaming).

According to a particular embodiment, the metadata management server **204** preventively marks selected metadata server devices (e.g. **231, 232**) as being dormant based on acquired knowledge of an unavailability pattern. E.g., the metadata management server **204** recognizes, based on monitoring of the metadata server device's throughput, that the metadata server device's throughput regularly drops below a specific value from 11 PM to 7AM, and the metadata management server **204** preventively marks these metadata server devices in its metadata server information **205** as being dormant during the observed periods of low throughput or unavailability.

According to a particular embodiment, if a metadata server device cannot honor a request for metadata due to (temporary) unavailability, (temporary) reduced bandwidth, etc., the requesting metadata client chooses another metadata server from the received list of metadata server devices if it received more than one metadata server identifiers (addresses) for the requested metadata. Otherwise the metadata client device transmits a new metadata request to metadata management server **204** and the latter returns a different list of metadata server devices to the metadata client device. According to a particular embodiment a metadata client device informs the metadata management server **204** of identifier(s) (address(es)) of unavailable metadata server(s), i.e., metadata servers that it tried to contact but that do not reply or which (no longer) have the requested metadata. The metadata management server **204** uses this information to (temporarily) remove the server from the server information **205** as having (detaining, storing) the requested metadata, or to (temporarily) mark the unavailable server as a dormant server so that it will not be included in any metadata server list provided to a metadata client device when the metadata server is marked as being dormant.

According to the embodiment of figure **3****,** the devices in network **22** transmit a request for a list of synchronized metadata servers in network **22** to the metadata management server **204.** This mode of operation can be referred to as being a "pull" mode of information delivery. According to a different embodiment, the metadata management server **204** implements a "push" mode of delivery of the list of synchronized metadata servers, wherein the metadata management server **204** regularly (periodically) transmits lists of synchronized metadata servers to the devices in network **22.** Such a push mechanism is preferably based on a multicast transmission mode for reasons of bandwidth efficiency. The list of synchronized metadata servers transmitted to the devices in network **22** is updated if metadata is updated and some metadata server devices may become stale while the update is deployed in network **22.** Further in the push transmission mode, the metadata management server may regularly (periodically, frequently) change the contents of the transmitted list of synchronized metadata servers for load balancing so that metadata clients do not always choose the same metadata servers. Alternatively, the metadata client devices selectively (randomly) pick metadata servers from the received list that have (at least part of) the desired metadata, thereby implementing an alternative load balancing mechanism. The push mode mechanism advantageously lowers the burden on metadata provider **20** management server **204** and reduces the number of messages exchanged between the devices in network **22** and metadata provider **20** since the devices in network **22** no longer need to transmit metadata request messages to metadata provider **20.** The two load balancing mechanisms, regular changes (selections) in contents of the list of metadata servers (information comprising a selection of devices in the network **22** having installed a metadata update) in the network **22** as transmitted by metadata provider **20,** and selective picking (selection) of metadata servers from the list by metadata client devices, may be mixed to form a particular effective load balancing mechanism. The push and pull modes may be mixed to form a particularly bandwidth effective way of transmitting information related to identification/selection of synchronized metadata servers (information comprising a selection of devices in the network 22 that have installed a metadata update) to the devices in network **22.**

According to embodiments of the present principles, the burden of providing metadata to metadata client devices is thus advantageously distributed over a plurality of metadata server devices located in the network **22**.

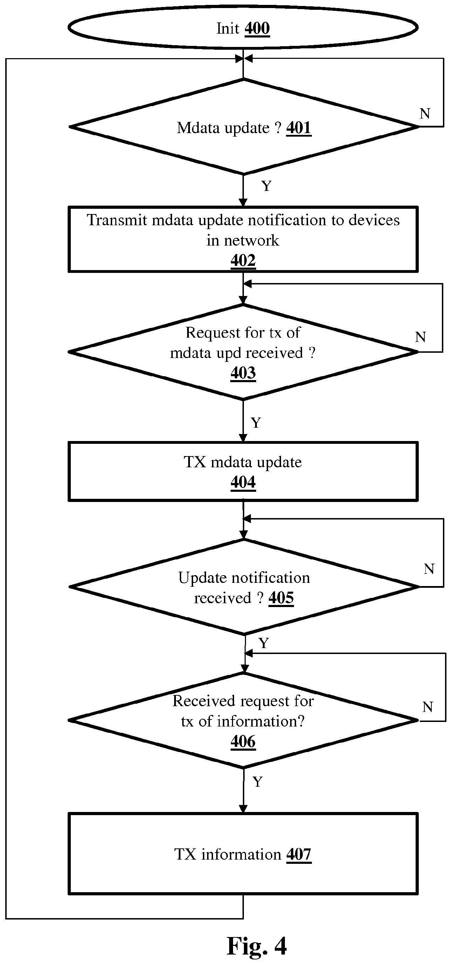

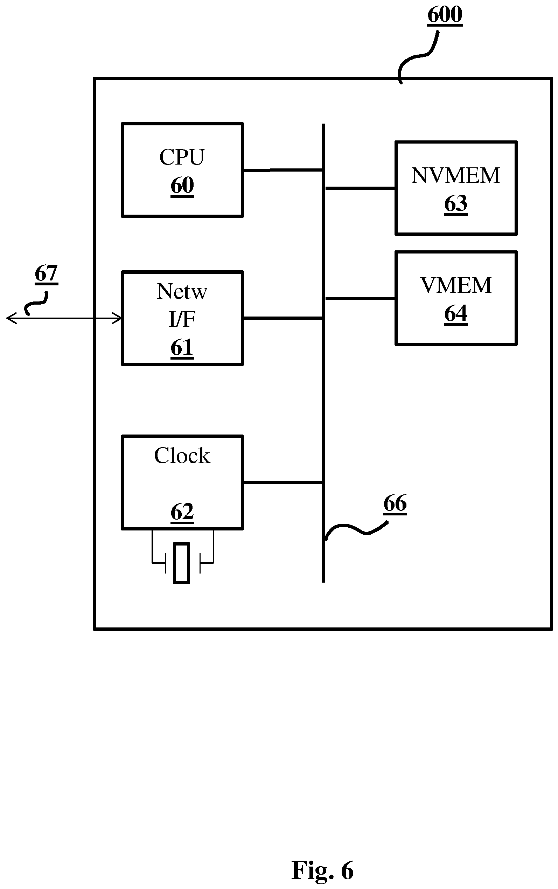

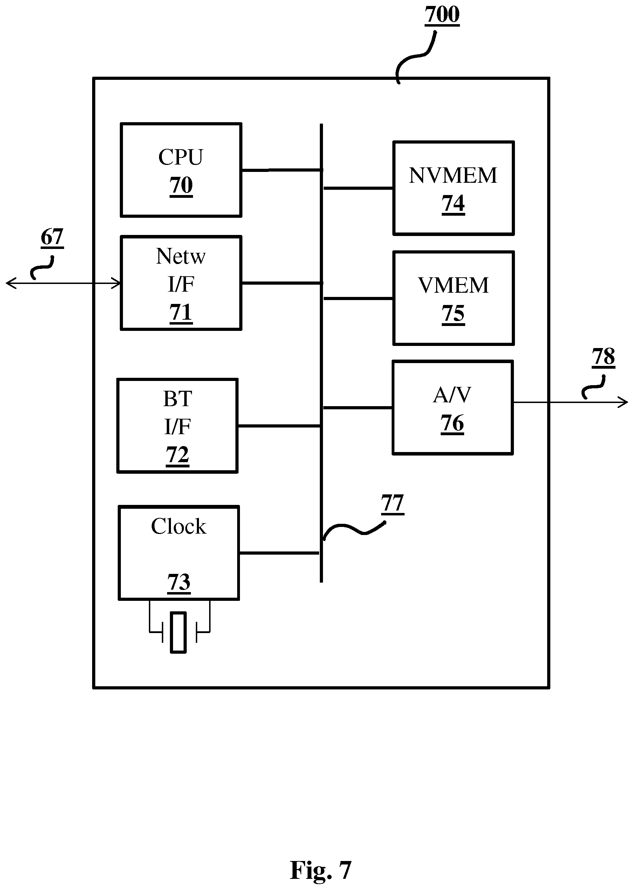

**Figure 4** is a flow chart of an embodiment of the method for distributing metadata to devices in a network according to the present principles. The method is for example implemented by a metadata distribution device **204** of Fig. **2** or by a metadata distribution device **600** of Fig. **6****.** The devices in the network are for example implemented by any of the devices **220, 221, 222** and **223** of Fig.2 or device **700** of Fig. **7****.** Any variables, parameters, buffers and other memory required during the execution of the method are initialized in an initialization step **400.** In a conditional step **401,** it is determined if a metadata update is received or if an update to metadata is done. For example, an update is done to metadata stored in the metadata storage **103** (Fig.**2**) by the metadata provider **20** (Fig.**2**), or by an external metadata provider (not shown), or is received from the external metadata provider. Having updated the metadata stored in metadata storage **103,** in a step **402,** a metadata update notification is transmitted to devices in the network, for example to any of the devices **221** and **222** (Fig. **3**). In a conditional step **403,** a request for transmission of a metadata update is received from at least one of the devices in the network to which the metadata update notification is transmitted, for example from the devices **221** and **222.** In a step **404,** the metadata update is transmitted to one or more of the devices in the network from which a request for transmission of a metadata update is received, for example from devices **221** and **222.** In a conditional step **405,** an update installed notification is received from or more of the devices in the network to which the metadata update is transmitted. In a step **406,** a request for transmission of information is received from one or more devices in the network, the information comprising (references to, identifiers of) a selection of devices in the network that have installed the metadata update. In a step **407,** the requested information is transmitted to the one or more devices in the network from which the request for transmission of information is received, the information enabling the one or more devices in the network from which the request for transmission of information is received to retrieve updated metadata from the selection of devices in the network. Having transmitted the requested information, the method returns to step **401.**

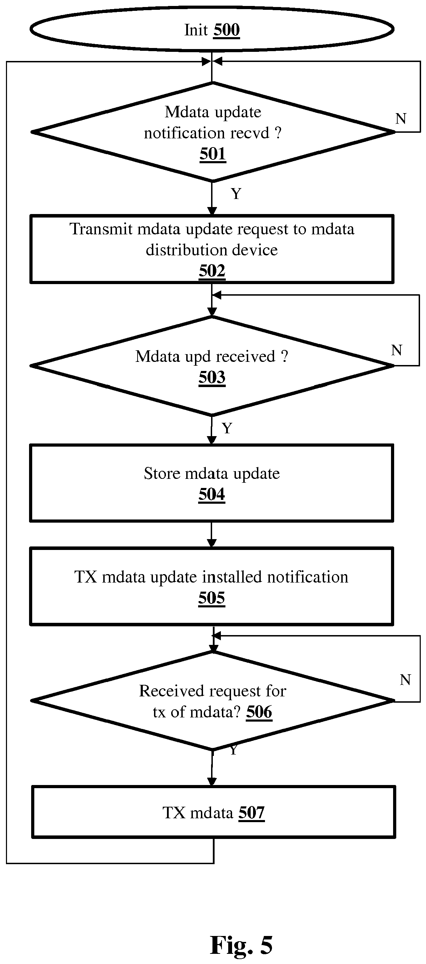

**Figure 5** is a flow chart of an embodiment of the method for receiving metadata from devices in a network according to the present principles. The method is for example implemented by any of the server/client devices **220, 221, 222** and **223** of Fig. **2** or by a device **700** of Fig. **7****.** Any variables, parameters, buffers and other memory required during the execution of the method are initialized in an initialization step **500.** In a conditional step **501,** a metadata update notification is received from a metadata distribution device, such as device **204** (Fig.**2**) or device **600** (Fig.**6**). In a step **502,** a request for transmission of a metadata update is transmitted to the metadata distribution device. In a conditional step **503** the metadata update is received from the metadata distribution device in response to the request. In a step **504,** an update installed notification is transmitted to the metadata distribution device. In a conditional step **505,** a request for transmission of metadata is received from one or more devices in the network. In a step **506,** the requested metadata is transmitted to the one or more devices in the network from which the request for transmission of metadata is received. Having transmitted the requested metadata, the method returns to step **501.**

**Figure 6** is an embodiment of a metadata distribution device capable of implementing embodiments of the method for metadata distribution according to the present principles. The device **600** comprises a Central Processing Unit (CPU) or processor **60,** a network interface **61** for connection **67** to a network such as network **22** (Fig.2), a clock unit **62,** a non-volatile memory **63,** a volatile memory **64.** Elements **60-64** are interconnected through an internal data- and communication bus **66.** Device **600** is for example a dedicated server device, located in the metadata- or service provider premises.

**Figure 7** is an embodiment of a network device capable of implementing embodiments of the method for receiving metadata from devices in a network according to the present principles. The device **700** comprises a Central Processing Unit (CPU) or processor **70,** a network interface **71** for connection **67** to a network such as network **22** (Fig.2), a Bluetooth interface **72** for reception of remote control commands from a user, a clock unit **73,** a non-volatile memory **74,** a volatile memory **75,** and an audio/video interface **76** for connection via connection **78** to a rendering device. Elements **70-76** are interconnected through an internal data- and communication bus **77.** Device **700** is, for example, a home gateway, a Set Top Box, a digital television, a mobile telephone or tablet.

It is to be appreciated that some elements in the drawings may not be used or be necessary in all embodiments. Some operations may be executed in parallel. Different embodiments other than those illustrated and/or described are possible.

It is to be appreciated that aspects of the present principles can be embodied as a system, method or computer readable medium. Accordingly, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized.

Thus, for example, it is to be appreciated that the diagrams presented herein represent conceptual views of illustrative system components and/or circuitry embodying the principles of the present disclosure. Similarly, it is to be appreciated that any flow charts, flow diagrams, state transition diagrams, pseudo code, and the like represent various processes which may be substantially represented in computer readable storage media and so executed by a computer or processor, whether or not such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing, as is readily appreciated by one of ordinary skill in the art: a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

## Claims

1. A method for distributing metadata to devices (220, 221, 222, 223) in a network (22), the method comprising:
transmitting (402) a metadata update notification to devices in said network;
receiving (403) a request for transmission of a metadata update from at least one of said devices in said network to which said metadata update notification is transmitted;
transmitting (404) said metadata update to said at least one of said devices in said network from which a request for transmission of a metadata update is received;
receiving (405) an update installed notification from at least one of said devices in said network to which said metadata update is transmitted;
receiving (406), from at least one device in said network, a request for transmission of information comprising a selection of devices in said network that have installed said metadata update; and
transmitting (407), to said at least one device in said network from which said request for transmission of information is received, said information enabling said at least one device in said network from which said request for transmission of information is received to retrieve updated metadata from said selection of devices in said network.

2. The method according to claim 1, wherein said metadata update notification is selectively addressed to devices in said network that store metadata that is subject to said metadata update.

3. The method according to claim 1 or 2, wherein said information comprises at least one device identifier enabling a device in said network to address a request for metadata to the at least one device identified by said device identifier.

4. The method according to claim 3, wherein said information further comprises a list of metadata per said at least one device identified by said device identifier and stored by said at least one device identified by said device identifier.

5. The method according to any of claims 1 to 3, comprising:
marking (406) as updated in a local list (205) of devices in said network from which said update installed notification is received; and
using said local list for said selection of devices in said network that have installed said metadata update by selecting at least one device from said local list that is marked in said local list as having installed said metadata update.

6. The method according to claim 5, further comprising:
marking as dormant in said local list devices in said network that are unavailable; and
excluding devices in said network that are marked in said local list as unavailable from said selection of devices in said network that have installed said metadata update for said transmitting of information comprising a selection of devices in said network.

7. A metadata distribution device (204, 500) for distributing metadata to devices (220, 221, 222, 223) in a network (22), wherein said metadata distribution device comprises a processor (60), a memory (63, 64) and a network interface (61) configured to:
transmit a metadata update notification to devices in said network;
receive a request for transmission of a metadata update from at least one of said devices in said network to which said metadata update notification is transmitted;
transmit said metadata update to said at least one of said devices in said network from which a request for transmission of a metadata update is received;
receive an update installed notification from at least one of said devices in said network to which said metadata update is transmitted;
receive, from at least one device in said network, a request for transmission of information comprising a selection of devices in said network that have installed said metadata update; and
transmit, to said at least one device in said network from which said request for transmission of information is received, said information enabling said at least one device in said network from which said request for transmission of information is received to retrieve updated metadata from said selection of devices in said network.

8. The device according to claim 7, wherein said processor, said memory and said network interface are further configured to selectively address said metadata update notification to devices in said network that store metadata that is subject to said metadata update.

9. The device according to claim 7 or 8, wherein said processor, said memory and said network interface are further configured to:
mark as updated in a local list (205) of devices in said network from which said update installed notification is received; and
use said local list for said selection of devices in said network that have installed said metadata update by selecting at least one device from said local list that is marked in said local list as having installed said metadata update.

10. The device according to claim 9, wherein said processor, said memory and said network interface are further configured to:
mark as dormant in said local list devices in said network that are unavailable; and
exclude devices in said network that are marked in said local list as unavailable from said selection of devices in said network that have installed updated metadata for said selection of devices in said network.

11. The device according to claim 10, wherein said processor, said memory and said network interface are further configured to receive unavailability notifications respectively availability notifications from devices in said network that enter, respectively exit, a period of unavailability.

12. A method for receiving metadata from devices (220, 221, 222, 223) in a network (22), the method comprising:
receiving (501), from a metadata distribution device (204), a metadata update notification;
transmitting (502), to said metadata distribution device, a request for transmission of a metadata update;
receiving (503), from said metadata distribution device, said metadata update in response to the request;
storing (504) said metadata update received from said metadata distribution device;
transmitting (505), to said metadata distribution device, an update installed notification;
receiving (506), from at least one of said devices in said network, a request for transmission of metadata; and
transmitting (507), to said at least one of said devices in said network from which said request for transmission of metadata is received, said stored metadata update.

13. The method according to claim 12, further comprising transmitting, to said metadata distribution device, an unavailability notification when entering a period of unavailability, and transmitting, to said metadata distribution device, an availability notification when exiting said period of unavailability.

14. A device (220, 221, 222, 223, 700) in a network, the device comprising a processor (70), a memory (74, 75) and a network interface (71) configured to:
receive, from a metadata distribution device (204), a metadata update notification;
transmit, to said metadata distribution device, a request for transmission of a metadata update;
receive, from said metadata distribution device, said metadata update in response to the request;
store said metadata update received from said metadata distribution device in said memory;
transmit, to said metadata distribution device, an update installed notification;
receive, from at least one of said devices in said network, a request for transmission of metadata; and
transmit, to said at least one of said devices in said network from which said request for transmission of metadata is received, said metadata update stored in said memory.

15. The device according to claim 14, wherein said processor, said memory and said network interface are further configured to transmit, to said metadata distribution device, an unavailability notification when entering a period of unavailability, and to transmit, to said metadata distribution device, an availability notification when exiting said period of unavailability.
